# EUROPEAN PATENT SPECIFICATION

(11) **EP 3 268 925 B1**
(45) Date of publication and mention of the grant of the patent: **31.07.2019**
(21) Application number: 16807880.6
(22) Date of filing: 13.06.2016
(51) Int. Cl.: H04L 12/28, H04L 12/12, G06Q 50/12, H04L 29/08, H04L 12/24

(54) **SYSTEM FOR MANAGING ROOM AND METHOD OF SETTING SERVICE**
SYSTEM FÜR RAUMVERWALTUNG UND VERFAHREN ZUR EINSTELLUNG EINES DIENSTES
SYSTÈME DE GESTION DE SALLE ET PROCÉDÉ DE RÉGLAGE DE SERVICE

(30) Priority: 12.06.2015 KR 20150083623
(43) Date of publication of application: 17.01.2018
(73) Proprietor: Samsung Electronics Co., Ltd., Suwon-si, Gyeonggi-do 16677 (KR)
(72) Inventor: SONG, Yoseong, Suwon-si Gyeonggi-do (KR); KANG, Manseok, Suwon-si Gyeonggi-do (KR); KIM, Kyungjae, Suwon-si Gyeonggi-do (KR); MIN, Hyunsuk, Suwon-si Gyeonggi-do (KR); PARK, Yunho, Suwon-si Gyeonggi-do (KR); EOM, Chungyong, Suwon-si Gyeonggi-do (KR); OH, Subyeong, Suwon-si Gyeonggi-do (KR); LIM, Yunjae, Suwon-si Gyeonggi-do (KR); CHOI, Sangsun, Suwon-si Gyeonggi-do (KR)
(74) Representative: Appleyard Lees IP LLP
(86) International application number: PCT/KR2016/006265
(87) International publication number: WO 2016/200240

(56) References cited:
- WO-A1-2014/155428
- JP-A- 2014 167 694
- KR-B1- 101 272 357
- US-A1- 2001 034 754
- US-A1- 2005 131 991
- US-A1- 2012 274 864
- US-A1- 2013 024 884
- US-A1- 2015 004 915

## Description

### Technical Field

The present disclosure relates to a system and a method for pairing a plurality of devices and a gateway arranged in a room and collectively controlling the plurality of paired devices according to a preset operation schedule and condition.

### Background Art

Due to recent improvements in semiconductor technology and wireless communication technology, a plurality of devices may form a network and the plurality of devices can be remotely controlled. In order to remotely control the devices, a process of registering the device in a gateway or a server, which can collectively manage the devices, is first required. Such a process is called pairing.

The pairing process should be performed between each device and the gateway so that many procedures are needed to pair the plurality of devices and the gateway.

The above information is presented as background information only to assist with an understanding of the present disclosure. No determination has been made, and no assertion is made, as to whether any of the above might be applicable as prior art with regard to the present disclosure. WO2014155428A1 discloses a home control system comprising a home controller, a server and one or more devices. US2005/131991A1 discloses a home network system comprising a management server and a display terminal. US20010034754A1 discloses a system for providing access and control of devices on customer premise gateways.

### Disclosure of Invention

### Solution to Problem

In a building such as a hotel having many rooms, a plurality of devices arranged in each room should be paired to efficiently control the plurality of devices arranged within the room. When such a pairing process is performed in each room, many procedures and a lengthy amount of time are required.

Aspects of the present disclosure are to address at least the above-mentioned problems and/or disadvantages and to provide at least the advantages described below. Accordingly, an aspect of the present disclosure is to provide a system for managing rooms and a method of setting a service to generate a template for the same room type and to easily perform pairing and relevant settings through the template.

In accordance with an aspect of the present disclosure, a first server is provided. The first server includes a transceiver configured to communicate with a gateway existing in a room, and a processor configured to transmit at least one template including location information and identification (ID) information of a device to the gateway in order to control at least one device paired with the gateway.

The processor may control the transceiver to receive unique room information including at least one of ID information, room type information, and check-in information of the room from a second server and transmit, to the gateway, a template that is changed according to the unique room information. The processor may transmit different templates according to a room size, a room type, and a room grade to the gateway. The processor may divide the room into a plurality of zones and may generate the template to collectively control at least one device included in each of the zones. When a first user command for selecting a predetermined template among a plurality of pre-stored templates is received, the processor may make a control to transmit the predetermined template to the gateway and, when a second user command for mapping a device within a room in which the gateway exists to a user interface (UI) displayed in the predetermined template is input, to map the device within the room to the UI.

When a user command for setting a mode for the room by using the template is input, the processor may match and store the template and the set mode, and the mode for the room may include an operation schedule of at least one device existing in the room, an operation trigger command, and information on operation content.

The processor may set a device use right based on the template, generate a layer by combining the template, the mode, and the device use right information, and allocate different layers according to the room grade.

In accordance with another aspect of the present disclosure, a method of providing a template by a first server is provided. The method includes generating at least one template including location information and ID information of at least one device paired with a gateway existing in a room to control the device, and transmitting the template to the gateway.

The method may further includes receiving unique room information including at least one of ID information, room type information, and check-in information of the room from a second server, and generating a template that is changed according to the unique room information. The generating of the template may include generating different templates according to a room size, a room type, and a room grade. The generating of the template may include dividing the room into a plurality of zones and generating the template to collectively control at least one device included in each of the zones.

In accordance with another aspect of the present disclosure, a method of providing a template by a first server is provided. The method includes when a first user command for selecting a predetermined template among a plurality of pre-stored templates is input, transmitting the predetermined template to the gateway, and when a second user command for mapping a device within a room in which the gateway exists to a UI displayed in the predetermined template is input, mapping the device within the room to the UI. When a user command for setting a mode for the room by using the template is input, the method may further include matching and storing the template and the set mode, and the mode for the room may include an operation schedule of at least one device existing in the room, an operation trigger command, and information on operation content.

The method may include setting a use right of the device based on the template, generating a layer combining the template, the mode, and use right information of the device, and allocating different layers according to a room grade.

In accordance with another aspect of the present disclosure, a gateway is provided. The gateway includes a display, a transceiver configured to communicate with a first server and pair with at least one device, and a processor configured to control the transceiver to receive at least one template including a location, an ID, and attribute information of the device from the first server to control the at least one device and control the display device to display the received template.

The gateway may further include an input unit, wherein, when a user command for dividing the room into a plurality of zones is input through the input unit, a processor may make a control to display a generated template to collectively control at least one device included in each of the plurality of zones. When a user command for mapping a device within the room to a UI displayed in the template is input through the input unit, the processor may make a control to map the device within the room to the UI. When a user command for setting a mode for the room by using the template is input, the processor may match and store the template and the set mode, and the mode for the room may include an operation schedule of at least one device existing in the room, an operation trigger command, and information on operation content.

In accordance with another aspect of the present disclosure, a method of displaying a template by a gateway is provided. The method of displaying a template by a gateway includes pairing with at least one device, receiving at least one template including a location, an ID, and attribute information of the device from a first server to control the at least one device, and displaying the received template. The method further includes receiving a user command for dividing the room into a plurality of rooms and displaying a generated template to collectively control at least one device included in each of the plurality of zones according to the user command.

The method may further include receiving a user command for mapping a device within the room to a UI displayed in the template, and making a control to map the device within the room to the UI.

In addition, when a user command for setting a mode for the room by using the template is input, the method may further include matching and storing the template and the set mode, and the mode for the room may include an operation schedule of at least one device existing in the room, an operation trigger command, and information on operation content.

In accordance with another aspect of the present disclosure, a room management system is provided. The room management system includes a gateway, a first server connected to the gateway, and a plurality of devices located near the gateway and paired with the gateway, wherein the first server may provide a template including physical locations, IDs, and attribute information of the plurality of devices. Further, the room management system may further include a second server, wherein the second server may provide a number (unique information) of the room, a room type, and room state information to the first server. The first server may provide the template based on the room type. The template may include a first zone and a second zone, and the first zone and the second zone may include a plurality of devices. The first server may collectively control a plurality of devices included in the first zone. The first server may generate floor information by using at least one template. The first server may generate building information by using at least one piece of floor information. The first server may generate mode information for collectively controlling the plurality of devices by using a user template. The mode information may include a condition and an operation maintaining time to operate the plurality of devices. The first server may display a UI element corresponding to the device on the screen based on the template and information received from the device located near the gateway, and may map the device to a selected icon based on a user command for selecting one of a plurality of icons displayed in the UI element and the template.

In accordance with an aspect of the present disclosure, a user can easily control a gateway and a plurality of paired devices arranged in a room through a template provided from a server.

Other aspects, advantages, and salient features of the disclosure will become apparent to those skilled in the art from the following detailed description, which, taken in conjunction with the annexed drawings, discloses various embodiments of the present disclosure.

### Brief Description of Drawings

The above and other aspects, features, and advantages of certain embodiments of the present disclosure will be more apparent from the following description taken in conjunction with the accompanying drawings, in which:
FIG. 1 illustrates a configuration of a room management system according to an embodiment of the present disclosure;
FIGS. 2A, 2B, 2C, and 2D illustrate templates of a room management system according to various embodiments of the present disclosure;
FIG. 3 is a flowchart illustrating a process of generating and registering a template according to an embodiment of the present disclosure;
FIGS. 4A and 4B illustrate screens for generating floor information; according to various embodiments of the present disclosure
FIG. 5 is a flowchart illustrating a process of generating floor information according to an embodiment of the present disclosure;
FIG. 6 illustrates a screen for generating building information according to an embodiment of the present disclosure;
FIG. 7 is a flowchart illustrating a process of generating building information according to an embodiment of the present disclosure;
FIGS. 8A, 8B, and 8C illustrate a screen of generating a mode by using a room template according to various embodiments of the present disclosure;
FIG. 9 is a flowchart illustrating a process of generating a mode by using a room template according to an embodiment of the present disclosure;
FIG. 10 is a flowchart illustrating a process in which a gateway downloads a room template and mode information from a server according to an embodiment of the present disclosure;
FIG. 11 is a flowchart illustrating a process of changing a room template and mode information according to whether a user checks in or enters a room according to an embodiment of the present disclosure;
FIG. 12 illustrates a screen of pairing a plurality of devices and a gateway arranged in the room by using a room template and mapping the devices to icons displayed in the room template according to an embodiment of the present disclosure;
FIG. 13 is a flowchart illustrating a process of pairing a plurality of devices and a gateway arranged in a room by using a room template and mapping the devices to icons displayed in the room template according to an embodiment of the present disclosure;
FIG. 14 illustrates another example for pairing a plurality of devices by using a room template and mapping the devices to icons displayed in the room template according to an embodiment of the present disclosure;
FIG. 15 is a flowchart illustrating a process of pairing a plurality of devices by using a room template and mapping the devices to icons displayed in the room template according to another embodiment according to an embodiment of the present disclosure;
FIG. 16 illustrates a screen of pairing a plurality of devices by using a room template and mapping the devices to icons displayed in the room template according to another embodiment according to an embodiment of the present disclosure;
FIG. 17 is a flowchart illustrating a process of pairing a plurality of devices by using a room template according to another embodiment according to an embodiment of the present disclosure;
FIG. 18 is a block diagram illustrating a server according to an embodiment of the present disclosure; and
FIG. 19 is a block diagram illustrating a gateway according to an embodiment of the present disclosure.

Throughout the drawings, it should be noted that like reference numbers are used to depict the same or similar elements, features, and structures.

### Best Mode for Carrying out the Invention

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

As used herein, the expression "have", "may have", "include", or "may include" refers to the existence of a corresponding feature (e.g., numeral, function, operation, or constituent element such as component), and does not exclude one or more additional features.

Throughout the specification, the expressions "A or B," "at least one of A or/and B," "one or more of A or/and B," and the like may include all combinations of the listed items. For example, "A or B," "at least one of A and B," or "at least one of A or B" may refer to all cases of (1) including at least one A, (2) including at least one B, or (3) including both at least one A and at least one B.

The expressions "a first," "a second," "the first," "the second," and the like, used in various embodiments, may modify various elements irrespective of order and/or importance thereof and do not limit the corresponding elements. The above-described expressions may be used to distinguish an element from another element. For example, a first user device and a second user device indicate different user devices although both of them are user devices. For example, a first element may be termed a second element, and similarly, a second element may be termed a first element without departing from the scope of the present disclosure.

It will be understood that when an element (e.g., a first element) is referred to as being "(operatively or communicatively) coupled with/to" or "connected to" another element (e.g., a second element), it can be directly connected to the other element, or can be connected to the other element through another element (e.g., a third element). In contrast, it could be understood that when an element (e.g., a first element) is referred to as being "directly connected to" or "directly coupled to" another element (e.g., a second element), there is no intervening element (e.g., a third element) between the element and the other element.

The expression "configured (or set) to", used in this specification, may be interchangeably used with, for example, "suitable for," "having the capacity to," "designed to," "adapted to," "made to," or "capable of" according to circumstances. The term "configured (or set) to" may not necessarily mean "specifically designed to" in hardware. Instead, in some cases, the expression "device configured to" may mean that the device "can ∼" together with other devices or components. For example, the phrase "processor adapted (or configured) to perform A, B, and C" may mean a dedicated processor (e.g., embedded processor) only for performing the corresponding operations or a generic-purpose processor (e.g., central processing unit (CPU) or application processor (AP)) that can perform the corresponding operations by executing one or more software programs stored in a memory device.

The terms used herein are merely for the purpose of describing particular embodiments and are not intended to limit the scope of other embodiments. As used herein, singular forms may include plural forms as well unless the context clearly indicates otherwise. Unless defined otherwise, all terms used herein, including technical terms and scientific terms, may have the same meaning as commonly understood by a person of ordinary skill in the art to which the present disclosure pertains. Such terms as those defined in a generally used dictionary are to be interpreted to have the meanings equal to the contextual meanings in the relevant field of the art, and are not to be interpreted to have ideal or excessively formal meanings unless clearly defined in the present disclosure. In some cases, even the term defined in the present disclosure should not be interpreted to exclude embodiments of the present disclosure.

Hereinafter, the present disclosure will be described with reference to the accompanying drawings.

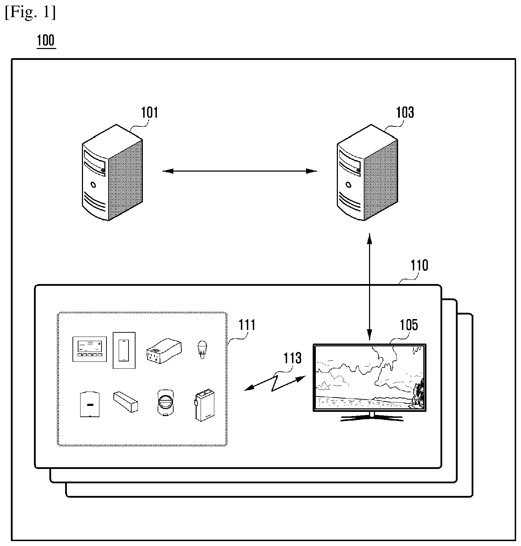

FIG. 1 illustrates a configuration of a room management system according to an embodiment of the present disclosure.

Referring to FIG. 1, a first server 103, a second server 101, a gateway 105, and a plurality of devices 111 are illustrated. The first server 103 may perform general management of the room management system 100 and may store information on the plurality of device 111, a template, and mode information.

The template may be divided into a room template and a mode template. Hereinafter, the term "template" will be used to mean "room template" unless specially mentioned.

The room template may include a room template, a zone template, and a device template. The room template may include physical location information of a device arranged in the room and identification (ID) information of the device. The ID information may be information by which the device can be identified. For example, the ID information may include a name of the device assigned by a user, a media access control (MAC) address, and a unique number assigned when being manufactured.

The room template may be visual information and may correspond to a user interface (UI). For example, when the room is divided into an entrance, a bedroom, and a living room, the room template may be divided into three zones and may be displayed on a screen in a shape similar to a room plane view. In each zone, an icon corresponding to the device may be displayed in accordance with an actual physical location of the device arranged in the room.

For example, when there are a door sensor and a door lock in the entrance of the room, there are a bedside lamp and a television (TV) in the bedroom, and there are a living room lamp and a refrigerator in the living room, a door sensor icon and a door lock icon may be displayed at locations on the room template corresponding to locations of the door sensor and the door lock arranged in the actual entrance in the zone corresponding to the entrance of the room template. In the zone corresponding to the bedroom displayed on the room template, a bedside lamp icon and a TV icon may be displayed at locations on the room template corresponding to locations of the bedside lamp and the TV arranged in the actual bedroom. In the zone corresponding to the living room displayed on the room template, a living room lamp icon and a refrigerator icon may be displayed at locations on the template corresponding to locations of the living room lamp and the refrigerator arranged in the actual living room.

The mode template may include a trigger template and an action template. The mode template may provide information on a condition and an operation for driving the device.

The first server 103 may be located outside a hotel. The first server 103 may include a transceiver that communicates with the gateway 105 and may be connected to the gateway 105through a wire or wirelessly to from a network. Further, the first server 103 may include a controller and a display. Alternatively, the first server 103 may not have a separate display and, in this case, a separate device having the display may access the first server 103 and data may be input into the first server103, or information provided from the first server 103 may be identified. For example, when a room device is set, a notebook PC may access the first server 103 and input data into the first server 103.

The second server 101 may provide unique information of the room (for example, a room number), a room type, and room state information to the first server. The unique information of the room may include, for example, a room number and physical location information of the room. The room type may be information on a room size or grade. For example, the room type may be "single", "double", or "suite". The room state information may include information on whether a guest checks in the corresponding room or the guest enters the room, or information on a time when the guest is due to arrive. The second server 101 may be located within the hotel, and check-in information when the guest checks in the hotel may be registered in the second server 101.

The gateway 105 may include a display, a transceiver, an input unit, and a controller. The gateway 105 may be paired with a plurality of neighboring devices and may form a local network with the plurality of devices 111. In the room 110, at least one gateway 105 may be arranged. The gateway 105 may control a plurality of paired devices. The gateway 105 may be a TV or PC arranged in the room. A template may be displayed on the display. The gateway 105 and the plurality of devices 111 may be connected wirelessly. For example, the gateway 105 and the plurality of devices 111 may be connected through Zigbee, Z wave, or Bluetooth.

The plurality of devices 111 may be Internet of things (IoT) devices or Internet of everything (IoE) devices having a communication function. For example, the plurality of devices 111 may be a lighting, a switch, a door sensor, a motion recognition sensor, a proximity sensor, a refrigerator, a sound device, and a door lock.

The controller of the first server may transmit at least one template including location information and ID information of at least one device to the gateway 105 to control the device that is paired with the gateway 105. The controller may control the transceiver to receive unique room information including at least one of ID information of the room, the room type information, and the check-in information from the second server 101, and may transmit a template that is changed according to the unique room information to the gateway 105.

The controller of the first server may transmit templates, which are different according to the room size, the room type, and the room grade, to the gateway 105.

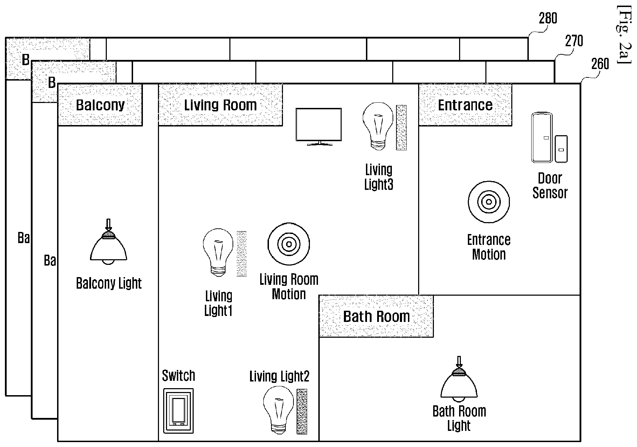

FIGS. 2A to 2D illustrate templates of the room management system according to various embodiments of the present disclosure.

Referring to FIG. 2A, a plurality of templates 260, 270, and 280 are illustrated. The plurality of templates 260, 270, and 280 correspond to visual information indicating a room structure, physical locations of a plurality of devices arranged in the room, and a space division state of the room. The template may be a graphic user interface (GUI) and data having a hierarchical structure. The template may be a room template. The room template may include a room template, a zone template, and a device template.

The template may be stored in the first server. The first server may provide different templates based on the room type. That is, templates may vary depending on the room type. The room type may be information on the room size or grade. For example, the room type may be "single", "double", or "suite". When room types are different, types or the number of devices arranged within the rooms may be changed, so different templates may be applied according to the room type. For example, when the room type corresponds to "single", the template 260 may be applied. When the room type corresponds to "double", the template 270 may be applied. When the room type corresponds to "suite", the template 280 may be applied.

The template may be generated by the user. The first server may provide a plurality of basic templates to easily generate the templates. The plurality of basic templates may be generated when the room management system is installed and may be stored in the first server. A method and a process for generating the templates will be described below.

The room may be divided into at least one zone according to a function, and at least one device may be arranged in each zone. For example, the room may be divided into a bath room, a living room, a balcony, and an entrance, and the bath room may be zone 1, the living room may be zone 2, the balcony may be zone 3, and the entrance may be zone 4.

The controller may divide the room into a plurality of zones and may collectively control at least one device arranged in each zone. A bathroom light may be arranged in the bathroom. A plurality of devices, such as living light 1, living light 2, a living room motion sensor, a switch, and living light 3, may be arranged in the living room. Further, a TV that serves as the gateway may be arranged in the living room. A balcony light may be arranged in the balcony. An entrance motion sensor and a door sensor may be arranged in the entrance. The controller may collectively control a plurality of devices arranged in the same zone through the template.

The template may have a shape similar to a plan view of the room. The template may be divided into a plurality of zones by the user, and at least one device may be arranged in each zone. The user may divide the template into a plurality of zones in consideration of the divided spaces of the actual room and an arrangement state of a plurality of devices. The plurality of devices arranged in each of the divided zones may be collectively controlled. The user may input names into the divided zones of the template.

That is, the controller may divide the room into a plurality of zone, and may collectively control at least one device included in each zone.

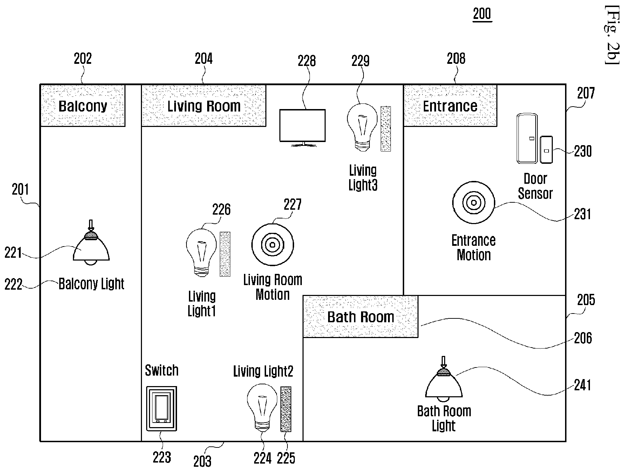

Referring to FIG. 2B, a template 200 is illustrated. The template 200 may include a plurality of zones 201, 203, 205, and 207. Names 202, 204, 206, and 208 may be assigned to the zones 201, 203, 205, and 207. The names may be input when the template is generated by the user and may be text or graphic data. For example, a name "balcony 202" may be assigned to the zone 201, a name "living room" may be assigned to the zone 203, a name "bath room" may be assigned to the zone 205, and a name "entrance 208" may be assigned to the zone 207. Each zone may include an icon corresponding to at least one device, a device name, and device attribute information. The device may be an IoT device, and may be paired with the gateway. The device attribute information may include a device state, for example, an on or off state of the device or a light color.

The icon corresponding to the device and device information may be displayed in the template 200 based on a physical location of the device. That is, the template may include physical location information and state information of the device. For example, a light icon 221 and a name 222 may be displayed in the zone 201. The name 222 may be input by the user or automatically input by the system. The icon 221 and the name 222 may be displayed at locations similar to physical locations of the actual light.

A switch icon 223, a first light icon 226, a second light icon 224, a third light icon 229, a motion sensor icon 227, a device name, and device attribute information 225, for example, a light color 225 may be displayed in the zone 203. Based on the device attribute information displayed in the template, a color of the light 224 may be an orange color, a color of the light 226 may be a yellow color, and a color of the light 229 may be a green color. Further, a TV icon corresponding to the TV 228 that serves as the gateway may be displayed in the zone 203.

A light icon 241 may be displayed in the zone 205. A motion sensor icon 231 and a door sensor icon 230 may be displayed in the zone 207.

A plurality of devices in the same zone may be grouped and collectively controlled. For example, the first light 226, the second light 224, and the third light 229 in the zone 203 may be collectively turned on or the illumination thereof may be changed.

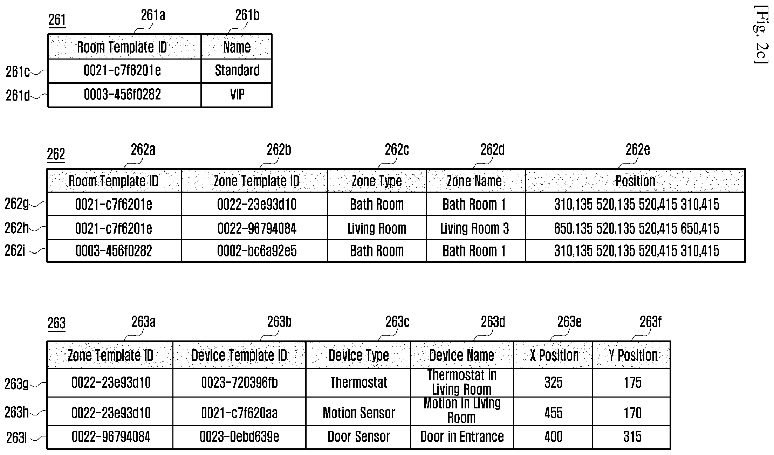

Referring to FIG. 2C, a room template is illustrated. The template may be a room template. The room template may include a room template 261, a zone template 262, and a device template 263. The room template 261, the zone template 262, and the device template 263 may be hierarchically configured.

The room template 261 may include a plurality of records 261c and 261d. Each record may include a room template ID 261a and a name 261b. The room template ID 261a may be a unique number assigned to each record. The name 261b may be a name of the room template. One record may be one room template. For example, the record 261c is a template having a room template ID "0021-c7f6201e" and a name "Standard". The record 261d is a template having a room template ID "0003-456f0282" and a name "VIP".

The zone template 262 may include a plurality of records 262g, 262h, and 262i. One record may be one zone template. Each record may include a room template ID 262a, a zone template ID 262b, a zone type 262c, a zone name 262d, and location information 262e. The zone template ID 262b may be a unique number assigned to each zone template. The zone type 262c may be a name classified according to a function of the corresponding zone. For example, the zone type 262c may be a "bathroom", or a "living room". The zone name 262d may be a unique name of the corresponding zone. For example, the zone name 262d may be "bathroom 1", "bathroom 2", or "living room 3. The location information may be a coordinate of the corresponding zone. When the corresponding zone is a quadrangle, the location information may include four coordinates. When the corresponding zone is a pentagon, the location information may include five coordinates. The coordinate may be generated based on a location of the zone of the actual room and may reflect location information of the actual zone. For example, the room template ID of the record 262g is 0021-c7f6201e, the zone template ID is 0022-23e93d10, the zone type is a bathroom, the zone name is bathroom 1, and the zone location is (310,135 520,135 520,415 310,415). At this time, the coordinate may be a coordinate on the screen.

The device template 263 may include a plurality of records 263g, 263h, and 263i. One record is one device template. Each record may include a zone template ID 263a, a device template ID 263b, a device type 263c, a device name 263d, and location information 263e and 263f. The device template ID 263d may be a unique number assigned to each device template. The device type may be a name indicating the type of device. The device name may be a unique name of the actual device. The location information 263eand 263f may be location coordinates on the screen where an icon corresponding to the device is displayed. The location information 263e and 263f may be generated based on the location of the actual device arranged in the room and may reflect location information of the actual device. For example, the device type of the device template "0023-720396fb" may be "thermostat", the device name may be "thermostat in living room", and the location coordinate may be (325, 175).

One room template may include at least one zone template. One zone template may include at least one device template. For example, one room template 261c may have two zone templates 262g and 262h. The zone template 262g may include two device templates 263g and 263h. The zone template 262h may include one device template 263i.

When the gateway arranged in the room is registered, the first server may register the gateway by using only relevant room template information. For example, when the "standard" room template 261c is selected to register the gateway, the first server may transmit the room template 262c, the zone templates 262g and 262h, and the device templates 263g, 263h, and 263i to the gateway.

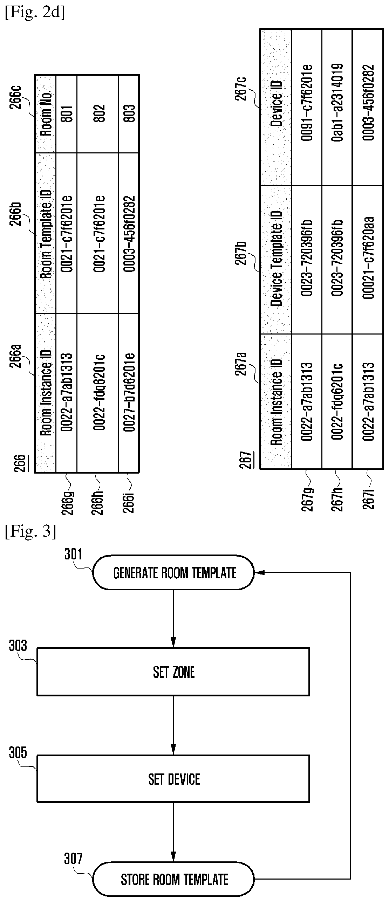

Referring to FIG. 2D, room instances are illustrated. The room instance may be generated at a time point when the user assigns a room template to a room number. When the room template is assigned to the room number, the first server may generate the room instance.

The room instance may include a room instance 266 and a device instance 267. One room instance may be generated per room, and the room instance 266 may include information on which room template is used.

The room instance 266 may include a plurality of records 266g, 266h, and 266i. One record corresponds to one room instance. The room instance 266 may include a room instance ID 266a, a room template ID 266b, and a room number 266c. The record 266g may have a room instance ID "0022-a7ab1313", a room template ID "0021-c7f6201e", and room number 801. Room 801 and room 802 may have the same room template.

The device instance 267 may provide information on a room to which the device belongs, device attribute information, and unique information (ID) of the device. The device instance 267 may include a plurality of records 267g, 267h, and 267i. One record corresponds to one device instance. The device instance 267 may include a room instance ID 267a, a device template ID 267b, and a device ID 267c. The device instance 267 may be generated when pairing between the device and the gateway is completed.

The room instance information may be generated at a time point when the gateway is registered. When the gateway is registered, the first server may selectively use only information corresponding to the room number in which the gateway is arranged. For example, when the gateway arranged in room 801 is registered, the first server may transmit the room instance 266g and the device instances 267g and 267i to the gateway.

FIG. 3 is a flowchart illustrating a process of generating and registering a template according to an embodiment of the present disclosure.

In the following description, the template may be a room template. However, this is merely as an example and not to be construed as limiting.

Referring to FIG. 3, the first server may receive a command for generating the room template from the user and may generate the room template in operation 301. The first server may provide a list of a plurality of preset templates or a list of conventionally generated templates to easily generate the room templates. When the user selects one template from the conventionally generated template list or a preset template, the first server may display the selected template on the screen. The user may modify the template displayed on the screen or may generate a new template, which has not existed.

When the template is displayed on the screen, the first server may set a zone on the template according to a user input in operation 303. That is, the first server may divide the template into a plurality of zones based on a user input. When the user inputs a zone name into each zone, the first server may display the input zone name in each zone.

When the user selects an icon corresponding to the device and arranges the icon in the corresponding zone, the first server may display an icon in the corresponding zone and may store a coordinate of a location where the icon is displayed. Further, the first server may perform a device setting step by displaying a device name and device attribute information near the icon in operation 305.

When the device setting is completed for all the divided zones, the first server stores the room template in operation 307.

Thereafter, when the user applies the room template to the room number, a room instance and a mode instance may be generated. The mode instance will be described later. When a first user command for selecting a predetermined template among a plurality of pre-stored templates is input, the controller of the first server transmits the predetermined template to the gateway and generates a room instance and a mode instance. When a second user command for mapping a device within a room in which the gateway exists is input into a UI displayed on a predetermined template, the first server may make a control to map the device within the room to the UI.

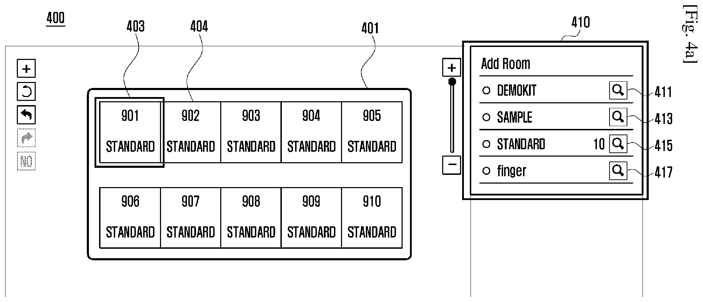

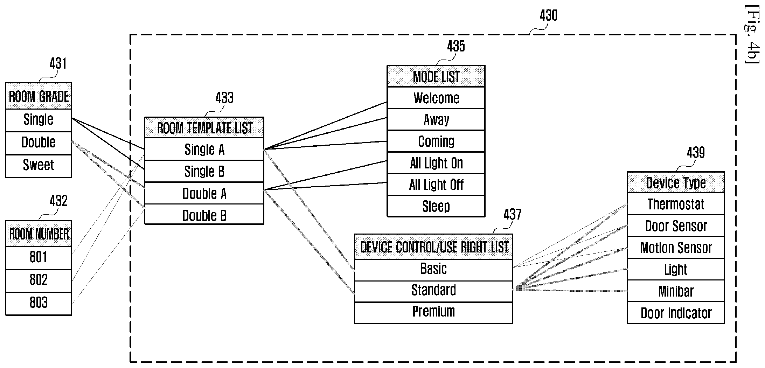

FIGS. 4A and 4B illustrate screens for generating layer information according to various embodiments of the present disclosure. That is, the screen for applying the template to the room of each floor and allocating a room number is illustrated.

Referring to FIG. 4A, a screen 400 showing a room list on one floor. The room list screen 400 may display a room list 401 and a template list 410, which can be applied to the room. The user may generate a plurality of rooms on the screen 400, select one of a plurality of templates 411, 413, 415, and 417 included in the template list 410 in the generated room, and apply the template to the room.

When the user inputs the number of rooms into the screen 400 for generating floor information, the first server may display the room list 401 on the screen 400. For example, when the user inputs 10 as the number of rooms, 10 rooms may be generated. Further, an arrangement structure of the 10 rooms may be designated.

When the user selects a room 403 in a state where the room list 401 is generated, a template list 410, which can be applied to the room 403, may be displayed on the screen 400. The template list 410 may include a plurality of templates 411, 413, 415, and 417, which have been conventionally generated. When the user selects the template 411 in the template list 410, the template 411 may be applied to the room 403. When the user selects a room 404 and then selects another template 415 in the template list 410, the template 415 may be applied to the room 404.

The template may be copied. For example, when the user selects the room 403 and copies the template 411 applied to the room 403 to generate the room 404, the template 411 applied to the room 403 may be equally applied to the room 404.

When the room is generated, the user may input a room number. Alternatively, the user may input the room number after copying the room. Alternatively, the user may modify an already input room number.

Referring to FIG. 4B, a layer 430, which can be applied according to each room grade 431 and room number 432, may be illustrated. The layer 430 may be a service provided through a combination and preset of a template, which can be applied to the room, a mode, and information on a device control/use right. The layer 430 may include a room template list 433, which can be applied according to the room, a mode list 435, a device control/use right list 437, and a device list 439. One layer may include one room template, a plurality of mode templates generated based on the room template, and one device control/use right.

The room template list 433 may include a plurality of room templates, which can be applied according to each room grade 431 or each room number 432. The mode list 435 may include a plurality of mode templates, which can be applied to each room template. The device control/use right list 437 may include a plurality of right levels, which can be applied to each room template. The device list 439 may include ID information of a plurality of devices. The ID information may be a device name.

The room may include a plurality of grades. For example, a room grade 431 may be divided in to "single", "double", and "suite".

The layer may be provided differently according to the room grade 431. For example, when the room grade 431 corresponds to "single", the template, which can be applied, may be "single A" and "single B". Modes that can be applied to "single A" are "welcome", "away", and "coming". Further, the device control/use right that can be applied to the "single" template is "basic". When the device control/use right corresponds to "basic", devices that can be controlled and used are "thermostat", "door sensor", and "motion sensor".

When the room grade 431 corresponds to "double", templates that can be applied are "double A", and "double B". Modes that can be applied to "double A" are "all light on" and "all light off'. Further, the device control/use right that can be applied to "double A" is "standard". When the device control/use right corresponds to "standard", devices that can be controlled and used are "thermostat", "door sensor", "motion sensor", "light", and "minibar".

The first server selects one room template from a plurality of room templates based on the room grade 431 or room number 432 and selects a plurality of mode templates generated based on the selected room template. Further, the first server may select one use right from the device control/use right list based on the selected room template and selects at least one device from a plurality of devices based on the selected use right to generate a layer.

One room template may be applied to one room, a plurality of mode templates and one device control/use right may be applied to one room template, and the layer may be generated by combining one template, a plurality of mode templates, and one device control/use right. The user can set the plurality of devices in the room by using the layer, thereby reducing a device setting time. When the user generates floor information, the first server may allocate a layer corresponding to each room while matching a room number and a room template.

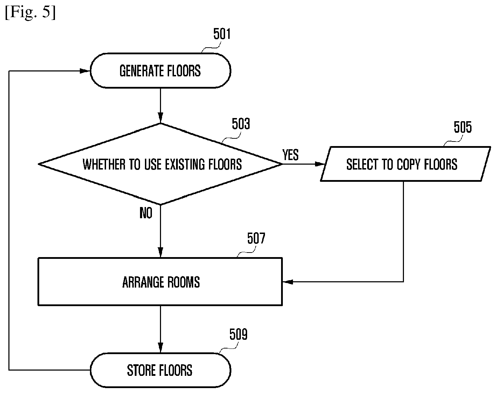

FIG. 5 is a flowchart illustrating a process of generating floor information according to an embodiment of the present disclosure.

Referring to FIG. 5, the first server generates floor information in operation 501. The first server may receive information on whether existing floor information is used to generate floor information from the user in operation 503. When the user selects to use the existing floor information, the first server may provide a conventionally generated floor information list. When the user selects one piece of floor information in the floor information list, the selected floor information is copied in operation 505. When the floor information is copied, a number of rooms included in the floor, room arrangement information, and a template applied to the room may be also copied.

When the user does not use the existing floor information, the first server may provide a screen for newly generating the floor information. The first server may arrange rooms by receiving information on the designation of a number of rooms and the arrangement of the rooms and displaying a room list on the screen based on the received information in operation 507. The first server may select a room in the room list, receive a user input for designating a template corresponding to the room, and apply the selected template to the selected room. Further, when the template is applied to the room, the first server may receive a room number from the user and assign the room number to the corresponding room. When the user copies a first room and generates a second room, a template applied to the first room may be automatically applied to the second room.

When the floor information is completely input, the first server may receive the floor information or another piece of information corresponding to the floor information, for example, a floor name from the user and may store the information in operation 509.

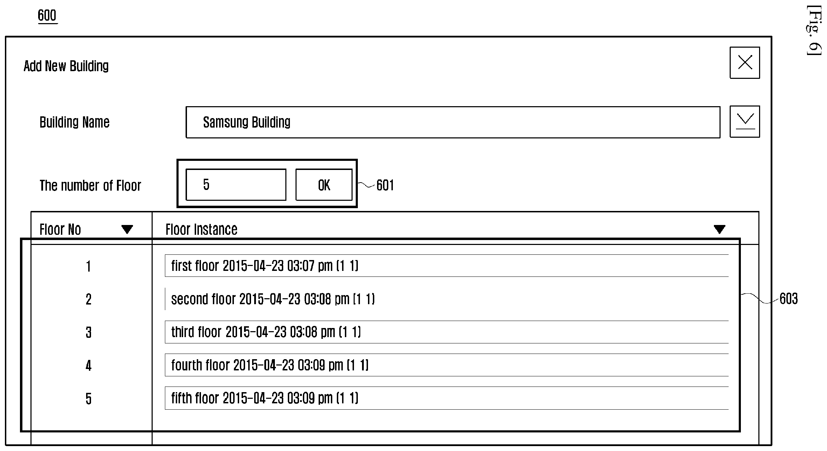

FIG. 6 illustrates a screen for generating building information according to an embodiment of the present disclosure.

Referring to FIG. 6, a building information generation screen 600 may include a UI element 601 for receiving a number of floors and a floor information list 603. The floor information list 603 may include a plurality of pieces of floor information. Each of the plurality of pieces of floor information may include information on a number of floors, a floor name, and floor information generation date and time.

The building information may be generated by combining pre-generated floor information.

When the user inputs a number of floors through the UI element 601, the first server may provide a screen for inputting floor information. The first server may display the floor information list 603 including the existing floor information on the screen and may add newly input floor information to the pre-generated floor information to update the floor information list, so as to generate building information.

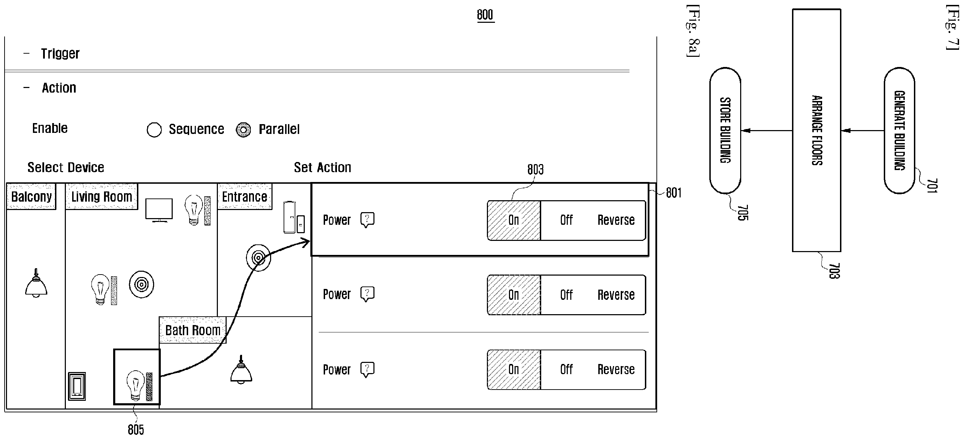

FIG. 7 is a flowchart illustrating a process of generating building information according to an embodiment of the present disclosure.

Referring to FIG. 7, the first server receives a building name from the user and generates building (information) in operation 701. When the building name is assigned and the building information is generated, the first server combines the conventionally generated floor information to arrange floors in operation 703. When the floor arrangement is completed, the first server stores the generated building information in operation 705.

FIGS. 8A to 8C illustrate a screen for generating a mode template by using a room template according to various embodiments of the present disclosure.

Referring to FIG. 8A, a mode template generation screen 800 is illustrated. The mode template generation screen 800 may display a room template and a control panel 801 for setting a plurality of devices arranged in the room. The control panel 801 may display a button 803 for turning on or off a corresponding device 805. A number of control panels may be the same as a number of devices. Further, the mode template generation screen 800 may include a schedule setting unit, a trigger setting unit, and an action setting unit for inputting conditions under which the device can operate. The user may input a time when the device operates and a relevant condition through the schedule setting unit. For example, the user may set whether to repeatedly operate the device. Further, the user may input information on whether to repeatedly operate the device every day, only on a particular day, or for a particular period.

The user may input a state of the device that operates and a relevant condition through the trigger setting unit. Further, the user may input the condition by combining states of devices within the room by using the room template in the trigger setting unit. For example, when an entrance door sensor and a motion sensor operate, the user may input a condition to trigger a motion sensor operation and turn on TV.

The user may define operations of a plurality of devices within the room for a group control through the action setting unit. The group control may correspond to a collective control of a plurality of devices. The user may set an operation by combining states of a plurality of devices within the room by using the room template in the action setting unit. For example, the user may set a condition to turn on all lights when an operation of a motion sensor in a living room is detected.

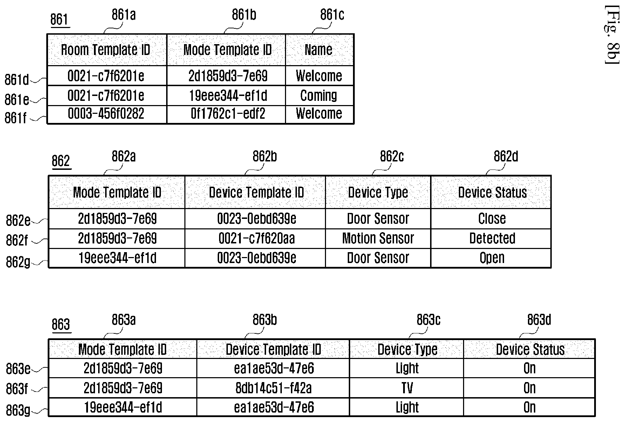

Referring to FIG. 8B, information on a mode template is illustrated. Mode template information may include a mode template 861, a trigger template 862, and an action template 863.

The mode template 861 may provide information on a room template including the corresponding mode. The mode template 861 may include a plurality of records 861d, 861e, and 861f. One record corresponds to one mode template. One mode template may include a room template ID 861a, a mode template ID 861b, and a mode template name 861c.

The trigger template 862 may provide device attribute information and information for executing an action. The trigger template 862 may include a plurality of records 862e, 862f, and 862g. One record corresponds to one trigger template. One trigger template may include information on a mode template ID 862a, a device template ID 862b, a device type 862c, and a device state 862d.

The action template 863 may provide device attribute information and information on an operation of the device. The action template 863 may include a plurality of records 863e, 863f, and 863g. One record corresponds to one action template. One action template 863 may include information on a mode template ID 863a, a device template ID 863b, a device type 863c, and a device state 863d.

One mode template may include a plurality of trigger templates and a plurality of action templates. For example, the mode template 861d may include trigger templates 862e and 862f and action templates 863e and 863f. When the gateway arranged in the room is registered, the first server may register the gateway by selectively using only the relevant room template information. For example, when a "standard" room template is selected to register the gateway, the first server may transmit mode templates 861d and 861e, trigger templates 862e, 862f, and 862g, and action templates 863e, 863f, and 863g.

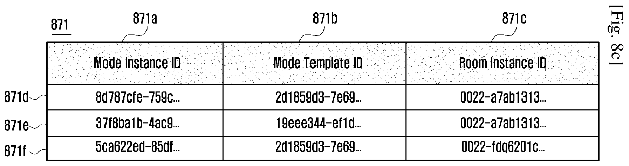

Referring to FIG. 8C, mode instance information 871 is illustrated. One mode instance may be information generated at a time point when the user allocates a room template to a room number. When the room template is allocated to the room number, the first server may generate the mode instance.

The first server may configure mode instance information 871 by using each mode instance generated in each room.

The mode instance information 871 may include a plurality of records 871d, 871e, and 871f. One record corresponds to one mode instance. One mode instance may include an ID 871a, a mode template ID 871b, and a room template ID 871c. One mode instance may provide information on a unique ID, a mode name, trigger information, action information, and a room corresponding to the corresponding mode.

The first server may load a device ID from the room instance information by using a device template ID and a room instance ID to control the device when the mode is executed.

When the gateway arranged in the room is registered, the first server may register the gateway by selectively using only the mode instance information corresponding to the relevant room. For example, when the gateway arranged in room 801 is registered, the first server may transmit instances 871d and 871e to the gateway.

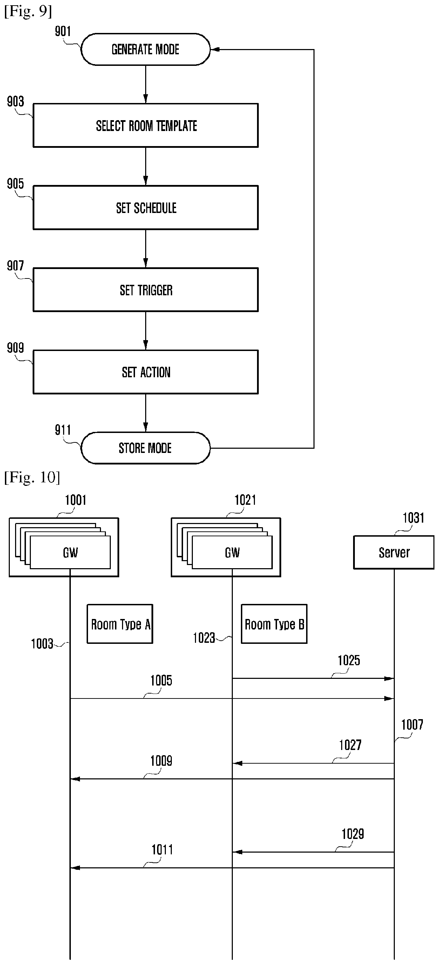

FIG. 9 is a flowchart illustrating a process of generating a mode by using a room template according to an embodiment of the present disclosure.

Referring to FIG. 9, when the user selects the generation of the mode in operation 901, the first server displays room templates to which the mode is applied on the screen and selects a room template according to a user input in operation 903. The first server displays the selected room template on the screen. When the user input for selecting one device from the room templates displayed on the screen is selected, the first server may generate a control panel corresponding to the device and may display the generated control panel on the screen.

Meanwhile, the first server may receive a user input through the gateway and may transmit the room template and the control panel. For example, the first server may receive a mode generation selection input and a device selection input by the user through the gateway. Further, the first server may display the room template through the gateway and may display the control panel.

In addition, the first server may designate a state of the device. For example, when the device is a living light, the control panel may display a button for turning on or off the living light.

When the device is selected through the room template, the first server may set a schedule for the selected device in operation 905. The schedule setting corresponds to a condition related to a time when the device operates. The first server may display a UI element for inputting the schedule related to the selected device on the screen and may receive the schedule for the selected device from the user.

Further, the first server may set a trigger for the selected device in operation 907. The trigger setting may correspond to a condition related to a state where the device operates. The first server may provide the room template to the user and the user may perform the trigger setting by combining a plurality of devices displayed in the room template.

Further, the first server may set an operation of the selected device in operation 909. The operation setting is for collectively controlling a plurality of grouped devices. The first server may provide the room template to the user and may receive a command for describing a group in a plurality of devices displayed in the room template from the user. When the group is set, the first server may collectively control operations of the plurality of devices set as the group.

The first server repeatedly performs the mode setting for all devices within the room and then stores the mode during such a process in operation 911. Thereafter, when the user selects the stored mode and all devices within the room meet the given setting condition, the devices may operate.

FIG. 10 is a flowchart illustrating a process in which a gateway downloads a room template and mode information from a server according to an embodiment of the present disclosure. Mode information corresponds to a mode template.

Referring to FIG. 10, a first gateway 1001, a second gateway 1021, and a first server 1031 installed to each room are illustrated. The first and second gateways 1001 and 1021 may be TVs installed in the room. According to some embodiments, there are two room types of A and B.

When the first gateway 1001 of the room having room type A registers a room number in operation 1003, the first gateway 1001 transmits the room number and gateway ID information to the first server 1031 in operation 1005. The first server 1031 searches for a corresponding room template and mode information by using the received room number in operation 1007. When the corresponding room template and mode information are found, the first server 1031 transmits the found room template information and mode information to the first gateway 1001 in operations 1009 and 1011.

When the second gateway 1021 of the room having room type B registers a room number in operation 1023, the second gateway 1021 transmits the room number and gateway ID information to the first server 1031 in operation 1025. The first server 1031 searches for a corresponding room template and mode information by using the received room number in operation 1007. When the corresponding room template and mode information are found, the first server 1031 transmits the found room template information and mode information to the second gateway 1021 in operations 1027 and 1029.

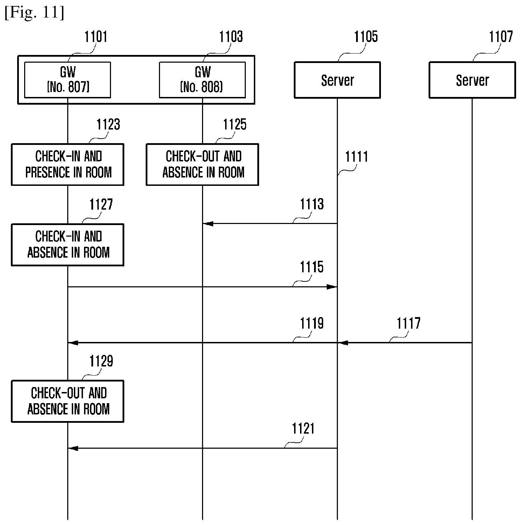

FIG. 11 is a flowchart illustrating a process of changing a room template and mode information according to whether a user checks in or enters a room according to an embodiment of the present disclosure. Mode information corresponds to a mode template.

Referring to FIG. 11, the room template applied to the room and the mode template may be changed according to whether the user checks in or enters the room. Referring to FIG. 11, rooms 1101 and 1103 of the same room type, a first server 1105, and a second server 1107 are illustrated. The second server 1107 may be located within the hotel and transmit check-in or check-out information of the room to the first server 1105 in operation 1117. The first server 1105 receives the check-in or check-out information transmitted from the second server 1107 and checks whether the user checks in or enters the room in operation 1111. That is, a user may be in one of various states including a check-in and presence in room state 1123, a check-in and absence in room state 1127 or a check-out and absence in room state 1125 or 1129. The first server 1105 may transmit the check-in or check-out information to a gateway of room 1101 in operation 1119.

The gateway may control a plurality of devices arranged in the room based on the check-in and check-out information transmitted from the first server, and an output of a motion sensor arranged in the room. Further, the gateway transmits information on whether the user enters the room to the first server 1105 according to a signal output from the motion sensor arranged in the room in 1115. The first server 1105 may determine whether the user enters the corresponding room based on the information transmitted from the gateway.

The first server 1105 may transmit the changed template and mode information to the gateways 1101 and 1103 according to whether the user enters and checks in the room in operations 1113 and 1121.

For example, the room 1101 is checked in and the user is in the room (i.e., state 1123), and room template A and mode template A are applied. When the guest leaves the room 1101 (i.e., state 1127), the gateway arranged in the room 1101 may recognize that the guest left the room 1101 based on information detected by an entrance sensor and a door sensor and transmit information indicating that the guest left the room 1101 to the first server 1105. The first server 1105 may determine that the room 1101 is in a check-in state and the user is not in the room 1101 based on information transmitted from the gateway and information transmitted from the second server 1107. When the guest checks out, the second server 1107 transmits check-out information to the first server. The first server 1105 may determine that a current state corresponds to a state where the user checks out the room 1101 and the user is not the room 1101 (i.e., state 1129), transmit information on room template B and mode template B to the room 1101, and change the room template and the mode template applied to the room 1101.

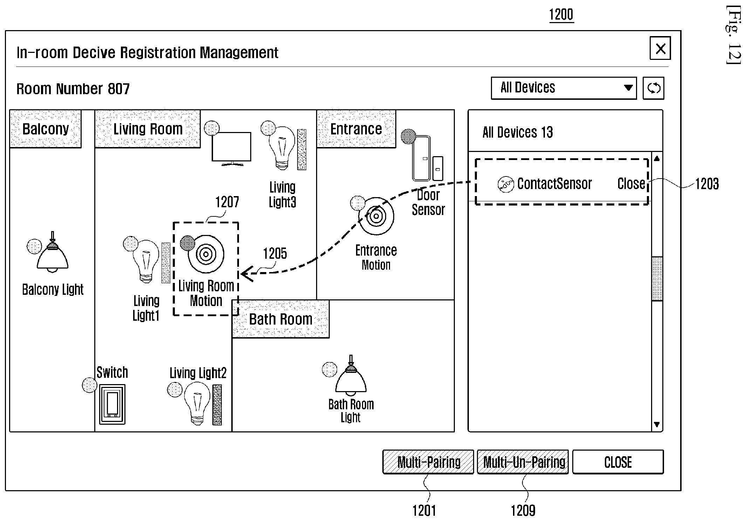

FIG. 12 illustrates a screen of pairing a plurality of devices and a gateway arranged in the room by using a room template and mapping the devices to icons displayed in the room template according to an embodiment of the present disclosure.

Referring to FIG. 12, a screen 1200 for a pairing setting between the gateway and the devices is illustrated. The pairing setting screen 1200 may display a room template and a UI element 1203 corresponding to a device to be paired. When the user touches or clicks a pairing start button 1201 on a lower part of the pairing setting screen 1200 and then presses a pairing button of the device to be paired, the UI element 1203 corresponding to the device to be paired may be displayed on the screen.

The UI element may be an icon or a name of the device. When there are a plurality of devices to be paired, UI elements corresponding to a plurality of devices to be paired may be displayed on the screen.

When the user drags (motion 1205) the UI element 1203 and moves the UI element 1203 to an icon 1207 displayed in the room template, the pairing and mapping between the gateway and the device to be paired are completed. Further, when the UI element 1203 corresponding to the device to be paired, which is displayed on the screen, and the icon 1207 displayed in the room template are simultaneously touched, the pairing and mapping may be completed. When the pairing and mapping for one device are completed, a device instance including a unique ID of the corresponding device may be generated.

When the pairing is completed, the user may end the pairing and mapping by touching or clicking a pairing completion button 1209.

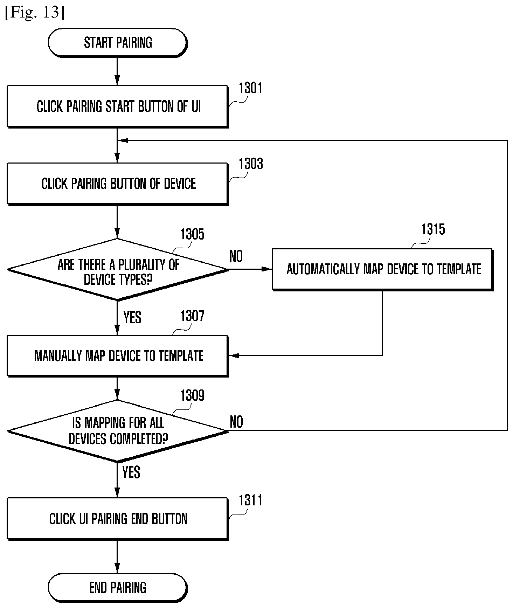

FIG. 13 is a flowchart illustrating a process of pairing a plurality of devices and a gateway arranged in a room by using a room template and mapping the devices to icons displayed in the room template according to an embodiment of the present disclosure.

Referring to FIG. 11, when the user clicks a pairing start button displayed on the setting screen to pair the gateway and the plurality of devices arranged in the room, the first server detects the clicking of the pairing start button in operation 1301.

When the user clicks a pairing button of the device to be paired, the first server detects the clicking of the pairing button in operation 1303 and displays a UI element corresponding to the device to be paired in some areas of the screen. When the pairing button of the device to be paired is clicked, the device to be paired transmits a device ID and device type information to the gateway or the first server. When the gateway receives the device ID and the device type information, the device ID and the device type information may be re-transmitted to the first server.

The first server may receive the device ID and the device type from the device to be paired and may determine whether there are a plurality of types of devices to be paired based on the received device ID and device type information in operation 1305 and, when there are a plurality of types of devices to be paired, may manually map an icon displayed in the room template to the paired device according to a user input in operation 1307. The icon may be a graphic object corresponding to the device arranged in the room.

For example, the first server may map the paired device to the icon displayed in the room template based on a user input for selecting the icon to be mapped to each device. Since the manually mapping process is the same as the description of FIG. 12, a detailed description thereof will be omitted.

When there is one type of device to be paired, the first server compares the received device ID and device type information with device type information included in the room template and automatically maps the icon displayed in the room template to the paired device in operation 1315. For example, when the device ID of a thermostat arranged in the room corresponds to "0091-c7f6201e" and the device type corresponds to "thermostat", if the user presses the pairing button of the thermostat, the thermostat transmits the device ID and the device type to the gateway or the first server. The first server searches for a device type included in the room template based on the received device ID and device type of the thermostat. The first server searches for the device type "thermostat" in the room template, maps the received device ID "0091-c7f6201e" to the room template, and generates a device instance. The first server determines whether the mapping with between all devices and icons displayed in the room template is completed in operation 1309 and, when the mapping is not completed, repeatedly performs operations 1305 to 1309. When the mapping for all the devices is completed and clicking of a pairing end button is detected in operation 1311, the first server may end the pairing.

The operation for mapping the paired device and the icon displayed in the room template may be performed through the gateway. The first server may provide a UI for mapping to the gateway to execute the mapping.

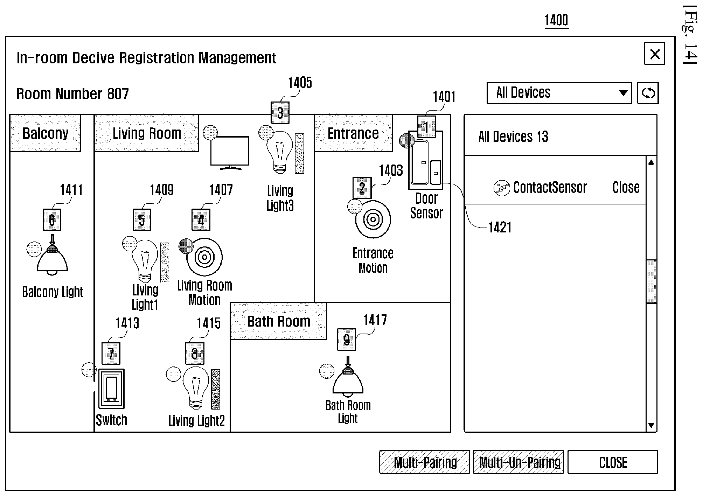

FIG. 14 illustrates another example for pairing a plurality of devices by using a room template and mapping the devices to icons displayed in the room template according to an embodiment of the present disclosure.

Referring to FIG. 14, a setting screen 1400 is provided for pairing a gateway and a plurality of devices arranged in the room. The setting screen 1400 may display a room template and a UI element corresponding to a device to be paired.

The first server may automatically generate and display serial numbers 1401, 1403, 1405, 1407, 1409, 1411, 1413, 1415, and 1417 near a plurality of icons displayed in the room template. The icon may be a graphic object corresponding to the device arranged in the room.

The first server may perform the pairing according to an order of the serial number. Further, the first server may display a cursor 1421 on the icon corresponding to the device to be currently paired. Alternatively, the first server may stress and display the icon corresponding to the device to be currently paired. When the user clicks a pairing button of the corresponding device according to the serial number displayed in the room template, the pairing is sequentially performed, and the first server may pair the gateway and the corresponding device through the pairing according to the serial number and may map the device to the icon displayed in the room template.

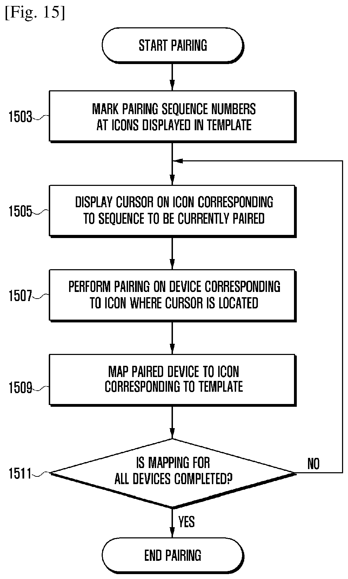

FIG. 15 is a flowchart illustrating a process of pairing a plurality of devices by using a room template and mapping the devices to icons displayed in the room template according to an embodiment of the present disclosure.

Referring to FIG. 15, when the pairing starts, the first server assigns pairing sequence numbers to the plurality of icons displayed in the room template in operation 1503. The plurality of icons may be graphic objects corresponding to the devices arranged in the room. The plurality of icons may map the plurality of devices arranged in the room in a one-to-one correspondence manner. The first server displays a cursor on the icon corresponding to the sequence number to be currently paired in operation 1505. Alternatively, the first server may display the icon corresponding to the sequence number to be currently paired to be visually distinguished from other icons.

When the user presses a pairing button of the device corresponding to the icon on which the cursor is located in the room template, the first server performs the pairing between the device corresponding to the icon on which the cursor is located and the gateway in operation 1507.

The first server maps the paired device to an icon corresponding to the room template in operation 1509. The first server determines whether the pairing for all devices is completed in operation 1511. When the pairing is not completed, the first server repeatedly performs the process from operations 1505 to 1509 on all the devices. When the pairing is completed, the first server ends the pairing and mapping.

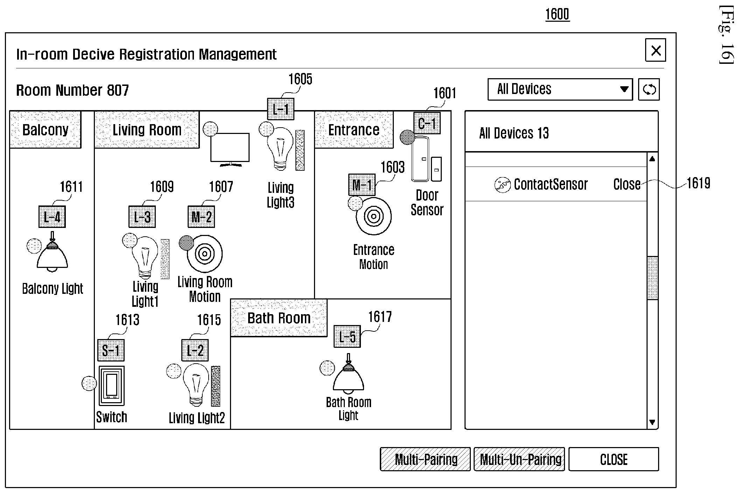

FIG. 16 illustrates a screen of pairing a plurality of devices by using a room template and mapping the devices to icons displayed in the room template according to an embodiment of the present disclosure.

Referring to FIG. 16, a setting screen 1600 for pairing a gateway and a plurality of devices arranged in the room is illustrated. The setting screen 1600 may display a room template and a UI element 1619 corresponding to a device to be paired. The UE element 1619 may be ID information of the device, for example, a name of the device.

The first server may display index numbers 1601, 1603, 1605, 1607, 1609, 1611, 1613, 1615, and 1617 near a plurality of icons displayed in the room template. The index numbers may be assigned when the devices are manufactured by a device manufacturing company and do not overlap each other. The first server may display the index number on the icon displayed in the room template based on the index number assigned to the device by the manufacturing company.

When the user presses a pairing button of the device to pair the devices with the gateway, the first server may receive index numbers from the devices and map icon corresponding to the plurality of devices displayed in the room template to actual devices based on the received index information.

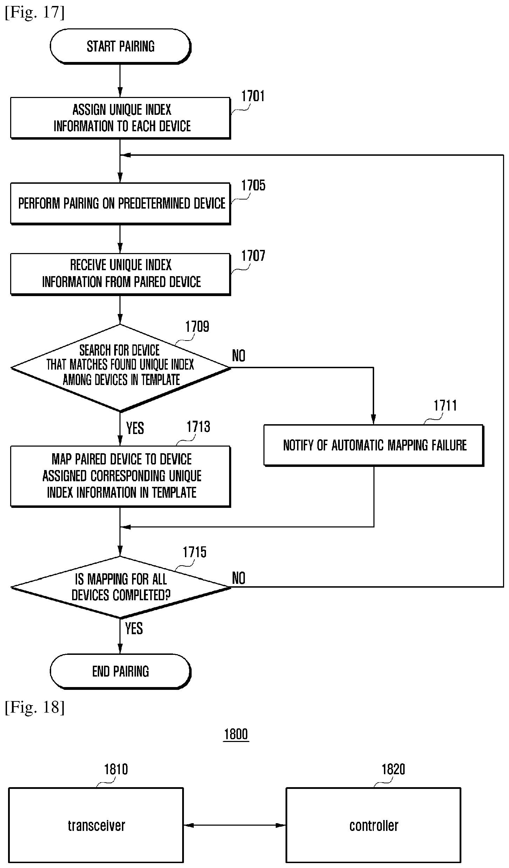

FIG. 17 is a flowchart illustrating a process of pairing a plurality of devices by using a room template according to an embodiment of the present disclosure.

Referring to FIG. 17, the plurality of devices arranged in the room may have index numbers assigned by a manufacturing company when the devices are manufactured. That is, unique index information is assigned to each device when the device is manufactured in operation 1701.

When the user selects a predetermined device and performs pairing in operation 1705, the first server receives index information from the paired device through the gateway in operation 1707. The first server searches for an icon, which matches the index number, among a plurality of icons displayed in the room template based on the index number transmitted from the device in operation 1709. When the icon, which matches the index number, exists, the first server maps the paired device to the icon displayed in the room template in operation 1713.

When the icon, which matches the index number transmitted from the device, does not exist in operation 1709, the first server provides an automatic mapping failure notification in operation 1711.

The first server determines whether the pairing for all devices is completed in operation 1715. When the pairing for all the devices is not completed based on a result of the determination, the first server repeatedly performs the process from operation 1705 to operation 1715 on all the devices. When the pairing is completed, the first server ends the pairing.

FIG. 18 is a block diagram illustrating a configuration of a server that performs the above described operation according to an embodiment of the present disclosure.

Referring to FIG. 18, the first server 1800 may include a transceiver 1810 and a controller (i.e., processor) 1820.

The transceiver 1810 may communicate with a gateway existing in the room. Alternatively, the transceiver 1810 may communicate with another server existing inside/ outside the hotel.

The controller 1820 may control the general operation of the first server 1800. The controller 1820 may generate at least one template including location information and ID information of the device to control at least one terminal paired with the gateway. The template may be a room template. Further, the controller 1820 may control the transceiver 1810 to transmit the generated template to the gateway.

Meanwhile, the controller 1820 may control the transceiver 1810 to receive unique room information including at least one of ID information of the room, room type information, and check-in information from a second server, and may transmit a template changed according to the unique room information to the gateway.

Further, the controller 1820 may generate different templates according to the room size, the room type, and the room grade, divide the room into a plurality of zones, and generate a template to collectively control at least one device included in each zone.

Meanwhile, when a first user command for selecting a predetermined template among a plurality of templates pre-stored in the first server 1800 is received through the transceiver 1810, the controller 1820 may control the transceiver 1810 to transmit the predetermined template to the gateway.

Further, when a second user command for mapping the device within the room in which the gateway exists to a UI displayed in the predetermined template is received, the controller 1820 may make a control to map the device within the room to the UI. The UI may be a graphic object.

Meanwhile, when a user command for setting a mode for the room by using the template is input, the controller 1820 may match and store the template and the set mode. The mode for the room may include information on an operation schedule, a trigger command, and operation content of at least one device existing in the room.

Further, the controller 1820 may make a control to set a device use right based on the template, to generate a layer by combining the template, the mode, and the device use right information, and to allocate different layers according to the room grade.

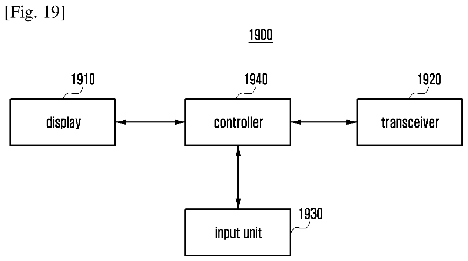

FIG. 19 is a block diagram illustrating a configuration of a gateway according to an embodiment of the present disclosure.

Referring to FIG. 19, a gateway 1900 may include a display 1910, a transceiver 1920, an input unit 1930, and a controller (i.e., processor) 1940.

The display 1910 is an element for displaying contents and a UI. The display 1910 may display a template received from the first server or generated by a user command.

The transceiver 1920 is an element for communicating with an external server or another electronic device. Further, the transceiver 1920 may communicate with at least one device existing in the same room as the gateway 1900.

The input unit 1930 is an element for receiving a user command. The input unit 1930 may be implemented in a UI form in the part or whole of the display 1910, or may be included in an external electronic device, such as remote control.

The controller 1940 may generally control the gateway 1900. When the pairing with at least one device within the room is performed, the controller 1940 may control the transceiver 1920 to receive at least one template including a location, an ID, and attribute information of the device from the first server to control at least one device and may control the display device 1910 to display the received template.

When a user command for dividing the room into a plurality of zones is input through the input unit 1930, the controller 1940 may control the display 1910 to display the generated template to collectively control at least one device included in each area of the plurality of zones.

Meanwhile, the template may be generated by being changed from a plurality of template types received by the gateway 1900 from the first server. Alternatively, the gateway 1900 may transmit the user command for dividing the room into the plurality of zones to the first server and, when the template changed by the first server according to the user command is received, may display the received changed template.

Further, when the user command for mapping the device within the room to the UI of the template is received through the input unit 1930, the controller 1940 may make a control to map the device within the room to the UI.

In addition, when the user command for setting a mode for the room by using the template is input through the input unit 1930, the controller 1940 may match the template and the set mode and store the template and the mode in a separate storage space.

The mode for the room may include information on an operation schedule, an operation trigger command, and operation content of at least one device existing in the room.

The methods according to the various embodiments of the present disclosure may be in a form of program commands executed through various computer means to be recorded in a computer readable medium. The computer readable medium may include a program command, a data file, a data structure, and the like independently or in combination. The program command recorded in the medium may be things specially designed and configured for the present disclosure, or things that are well known to and can be used by those skilled in the computer software related art. Examples of the computer-readable recording medium include magnetic media such as hard disks, floppy disks and magnetic tapes, optical media such as a compact disc read-only memory (CD-ROM) and a digital versatile disc (DVD), magneto-optical media such as floppy disks, and hardware devices such as a ROM, a random access memory (RAM) and a flash memory, which are specially configured to store and perform program instructions. Examples of the program command include a machine language code generated by a compiler and a high-level language code executable by a computer through an interpreter and the like.

While the present disclosure has been shown and described with reference to various embodiments thereof, it will be understood by those skilled in the art that various changes in form and details may be made therein without departing from the scope of the present disclosure as defined by the appended claims.

## Claims

1. A first server (103, 1800) for providing a template comprising:
a transceiver (1810) configured to communicate with a gateway (105) existing in a room; and
a processor (1820) configured to control the transceiver (1810) to transmit at least one room template including location information and identification information of at least one device (111) paired with the gateway (105) to the gateway (105) to control the device;
**characterized in that** the processor (1820) is further configured to:
control the transceiver (1810) to receive unique room information including at least one of ID information of the room, room type information, and check-in information of the room from a second server, and transmit a template changed according to the unique room information to the gateway (105).

2. The first server (103, 1800) of claim 1, wherein the processor (1820) is further configured to transmit different templates according to a room size, a room type, and a room grade to the gateway (105).

3. The first server (103, 1800) of claim 1, wherein the processor (1820) is further configured to:
divide the room into a plurality of zones, and
generate the template to collectively control at least one device (111) included in each of the zones.

4. The first server (103, 1800) of claim 1, wherein the processor (1820) is further configured to:
control to transmit, when a first user command for selecting a predetermined template among a plurality of pre-stored templates is input, the predetermined template to the gateway (105), and
map, when a second user command for mapping a device within a room in which the gateway exists to a user interface, UI, displayed in the predetermined template is received, the device (111) within the room to the UI,
wherein, when a user command for setting a mode for the room by using the template is input, the processor is further configured to match and store the template and the set mode,
wherein the mode for the room includes an operation schedule of at least one device existing in the room, an operation trigger command, and information on operation content, and
wherein the processor is further configured to:
set a use right of the device based on the template,
generate a layer combining the template, the mode, and use right information of the device, and
allocate different layers according to a room grade.

5. A method of providing a template by a first server (103, 1800), the method comprising:
generating at least one room template including location information and identification information of at least one device (111) paired with a gateway (105) existing in a room to control the device (111); and
transmitting the template to the gateway;
**characterized by** receiving unique room information including at least one of ID information of the room, room type information, and check-in information of the room from a second server; and
generating a template changed according to the unique room information, and
transmitting the changed template to the gateway.

6. The method of claim 5, wherein the generating of the template comprises generating different templates according to a room size, a room type, and a room grade,
wherein the generating of the template comprises:
dividing the room into a plurality of zones;
generating the template to collectively control at least one device (111) included in each of the zones, and
when a first user command for selecting a predetermined template among a plurality of pre-stored templates is input, transmitting the predetermined template to the gateway (105); and
when a second user command for mapping a device (111) within a room in which the gateway exists to a user interface, UI, displayed in the predetermined template is received, mapping the device within the room to the UI.

7. The method of claim 5, further comprising, when a user command for setting a mode for the room by using the template is input, matching and storing the template and the set mode,
wherein the mode for the room includes an operation schedule of at least one device existing in the room, an operation trigger command, and information on operation content,
setting a use right of the device based on the template;
generating a layer combining the template, the mode, and use right information of the device; and
allocating different layers according to a room grade.

## Patentansprüche

1. Erster Server (103, 1800) zum Bereitstellen einer Vorlage, umfassend:
einen Sendeempfänger (1810), ausgelegt zum Kommunizieren mit einem in einem Raum vorliegenden Gateway (105); und
einen Prozessor (1820), ausgelegt zum Steuern des Sendeempfängers (1810) zum Senden von mindestens einer Raumvorlage, aufweisend Positionsinformation und Identifizierungsinformation von mindestens einer mit dem Gateway (105) gekoppelten Einrichtung (111), zu dem Gateway (105) zum Steuern der Einrichtung;
**dadurch gekennzeichnet, dass** der Prozessor (1820) ferner ausgelegt ist zum
Steuern des Sendeempfängers (1810) zum Empfangen von eindeutiger Rauminformation, aufweisend mindestens eines von ID-Information des Raums, Raumtypinformation und Check-in-Information des Raums von einem zweiten Server und zum Senden einer Vorlage, geändert entsprechend der eindeutigen Rauminformation, zu dem Gateway (105).

2. Erster Server (103, 1800) nach Anspruch 1, wobei der Prozessor (1820) ferner ausgelegt ist zum Senden von entsprechend einer Raumgröße, einem Raumtyp und einer Raumklasse unterschiedlichen Vorlagen zu dem Gateway (105).

3. Erster Server (103, 1800) nach Anspruch 1, wobei der Prozessor (1820) ferner ausgelegt ist zum
Aufteilen des Raums in eine Mehrzahl von Zonen, und
Erzeugen der Vorlage, um mindestens eine in jeder der Zonen umfasste Einrichtung (111) gemeinsam zu steuern.

4. Erster Server (103, 1800) nach Anspruch 1, wobei der Prozessor (1820) ferner ausgelegt ist zum
Steuern, wenn ein erster Benutzerbefehl zum Auswählen einer vorbestimmten Vorlage unter einer Mehrzahl von vorgespeicherten Vorlagen eingegeben wird, zum Senden der vorbestimmten Vorlage zu dem Gateway (105), und,
wenn ein zweiter Benutzerbefehl zum Abbilden einer Einrichtung in einem Raum, in dem das Gateway vorliegt, auf einer Benutzeroberfläche, UI, angezeigt in der vorbestimmten Vorlage, empfangen wird: Abbilden der Einrichtung (111) in dem Raum auf die UI,
wobei, wenn ein Benutzerbefehl zum Einstellen eines Modus für den Raum unter Verwendung der Vorlage eingegeben wird, der Prozessor ferner dafür ausgelegt ist, der Vorlage und dem eingestellten Modus zu entsprechen und diese zu speichern,
wobei der Modus für den Raum eine Vorgangsplanung von mindestens einer in dem Raum vorliegenden Einrichtung, einen Vorgangsauslösebefehl und Information zu einem Vorgangsinhalt aufweist, und
wobei der Prozessor ferner ausgelegt ist zum Einstellen eines Benutzungsrechts der Einrichtung basierend auf der Vorlage,
Erzeugen einer Schicht, die die Vorlage, den Modus und die Benutzungsrechtinformation der Einrichtung kombiniert, und
Zuweisen unterschiedlicher Schichten entsprechend einer Raumklasse.

5. Verfahren zum Bereitstellen einer Vorlage durch einen ersten Server (103, 1800), wobei das Verfahren umfasst:
Erzeugen von mindestens einer Raumvorlage, aufweisend Positionsinformation und Identifizierungsinformation von mindestens einer mit einem in einem Raum vorliegenden Gateway (105) gekoppelten Einrichtung (111), zum Steuern der Einrichtung (111); und
Senden der Vorlage zu dem Gateway;
**gekennzeichnet durch** das Empfangen von eindeutiger Rauminformation, aufweisend mindestens eines von ID-Information des Raums, Raumtypinformation und Check-in-Information des Raums von einem zweiten Server; und Erzeugen einer entsprechend der eindeutigen Rauminformation geänderten Vorlage, und
Senden der geänderten Vorlage zu dem Gateway.

6. Verfahren nach Anspruch 5, wobei das Erzeugen der Vorlage das Erzeugen unterschiedlicher Vorlagen entsprechend einer Raumgröße, einem Raumtyp und einer Raumklasse umfasst,
wobei das Erzeugen der Vorlage umfasst:
Aufteilen des Raums in eine Mehrzahl von Zonen;
Erzeugen der Vorlage, um mindestens eine in jeder der Zonen umfasste Einrichtung (111) gemeinsam zu steuern, und,
wenn ein erster Benutzerbefehl zum Auswählen einer vorbestimmten Vorlage unter einer Mehrzahl von vorgespeicherten Vorlagen eingegeben wird, Senden der vorbestimmten Vorlage zu dem Gateway (105); und,
wenn ein zweiter Benutzerbefehl zum Abbilden einer Einrichtung (111) in einem Raum, in dem das Gateway vorliegt, auf einer Benutzeroberfläche, UI, angezeigt in der vorbestimmten Vorlage, empfangen wird: Abbilden der Einrichtung in dem Raum auf die UI.

7. Verfahren nach Anspruch 5, ferner umfassend, wenn ein Benutzerbefehl zum Einstellen eines Modus für den Raum unter Verwendung der Vorlage eingegeben wird, das Einhalten der Vorlage und des eingestellten Modus und deren Speichern,
wobei der Modus für den Raum eine Vorgangsplanung von mindestens einer in dem Raum vorliegenden Einrichtung, einen Vorgangsauslösebefehl und Information zu einem Vorgangsinhalt aufweist,
Einstellen eines Benutzungsrechts der Einrichtung basierend auf der Vorlage,
Erzeugen einer Schicht, die die Vorlage, den Modus und die Benutzungsrechtinformation der Einrichtung kombiniert; und
Zuweisen unterschiedlicher Schichten entsprechend einer Raumklasse.

## Revendications

1. Premier serveur (103, 1800) pour fournir un modèle comprenant :
un émetteur-récepteur (1810) configuré pour communiquer avec une passerelle (105) existant dans une salle ; et
un processeur (1820) configuré pour commander l'émetteur-récepteur (1810) pour transmettre au moins un modèle de salle comprenant des informations d'emplacement et des informations d'identification d'au moins un dispositif (111) apparié avec la passerelle (105) à la passerelle (105) pour commander le dispositif ;
**caractérisé en ce que** le processeur (1820) est en outre configuré pour :
commander l'émetteur-récepteur (1810) pour recevoir des informations uniques sur la salle, comprenant au moins l'une des informations d'identification de la salle, des informations sur le type de salle et des informations d'enregistrement de la salle provenant d'un deuxième serveur, et transmettre un modèle modifié en fonction des informations uniques de la salle à la passerelle (105).

2. Premier serveur (103, 1800) selon la revendication 1, le processeur (1820) étant en outre configuré pour transmettre différents modèles en fonction d'une taille de salle, d'un type de salle et d'une qualité de salle à la passerelle (105).

3. Premier serveur (103, 1800) selon la revendication 1, le processeur (1820) étant en outre configuré pour :
diviser la salle en une pluralité de zones, et
générer le modèle pour commander collectivement au moins un dispositif (111) inclus dans chacune des zones.

4. Premier serveur (103, 1800) selon la revendication 1, le processeur (1820) étant en outre configuré pour :
commander de transmettre, lorsqu'une première commande utilisateur pour sélectionner un modèle prédéterminé parmi une pluralité de modèles préenregistrés est entrée, le modèle prédéterminé à la passerelle (105), et
mettre en correspondance, lorsqu'une seconde commande utilisateur pour mettre en correspondance un dispositif à l'intérieur d'une salle dans laquelle la passerelle existe avec une interface utilisateur, UI, affichée dans le modèle prédéterminé, est reçue, le dispositif (111) à l'intérieur de la salle avec l'UI,
lorsqu'une commande utilisateur pour le réglage d'un mode pour la salle en utilisant le modèle est entrée, le processeur étant en outre configuré pour adapter et enregistrer le modèle et le mode réglé,
le mode pour la salle comprenant un programme de fonctionnement d'au moins un dispositif existant dans la salle, une commande de déclenchement du fonctionnement, et des informations sur le contenu du fonctionnement, et
le processeur étant en outre configuré pour :
définir un droit d'utilisation du dispositif basé sur le modèle,
générer une couche combinant le modèle, le mode et les informations de droit d'utilisation du dispositif, et
attribuer des couches différentes en fonction de la qualité d'une salle.

5. Procédé de fourniture d'un modèle par un premier serveur (103, 1800), le procédé comprenant :
la génération d'au moins un modèle de salle comprenant des informations d'emplacement et des informations d'identification d'au moins un dispositif (111) apparié à une passerelle (105) existant dans une salle pour commander le dispositif (111) ; et
la transmission du modèle à la passerelle ;
**caractérisé par** la réception des informations uniques de salle comprenant au moins l'une des informations d'identification de la salle, des informations de type de salle et des informations d'enregistrement de la salle provenant d'un second serveur ; et
la génération d'un modèle modifié en fonction des informations uniques de la salle, et
la transmission du modèle modifié à la passerelle.

6. Procédé selon la revendication 5, la génération du modèle comprenant la génération de différents modèles en fonction d'une taille de salle, d'un type de salle et d'une qualité de salle,
la génération du modèle comprenant :
la division de la salle en une pluralité de zones ;
la génération du modèle pour commander collectivement au moins un dispositif (111) inclus dans chacune des zones, et
lorsqu'une première commande utilisateur pour sélectionner un modèle prédéterminé parmi une pluralité de modèles préenregistrés est entrée, la transmission du modèle prédéterminé à la passerelle (105) ; et
lorsqu'une deuxième commande utilisateur pour mettre en correspondance un dispositif (111) à l'intérieur d'une salle dans laquelle la passerelle existe avec une interface utilisateur, UI, affichée dans le modèle prédéterminé est reçue, la mise en correspondance du dispositif à l'intérieur de la salle avec l'UI.

7. Procédé selon la revendication 5, comprenant en outre, lorsqu'une commande utilisateur pour régler un mode pour la salle en utilisant le modèle est entrée, l'adaptation et l'enregistrement du modèle et du mode réglé,
le mode pour la salle comprenant un programme de fonctionnement d'au moins un dispositif existant dans la salle, une commande de déclenchement du fonctionnement et des informations sur le contenu du fonctionnement,
la définition d'un droit d'utilisation du dispositif sur la base du modèle ;
la génération d'une couche combinant le modèle, le mode et les informations de droit d'utilisation du dispositif ; et
l'attribution de différentes couches en fonction de la qualité d'une salle.
